# EUROPÄISCHE PATENTSCHRIFT

(11) **EP 2 714 244 B1**
(45) Veröffentlichungstag und Bekanntmachung des Hinweises auf die Patenterteilung: **09.09.2015**
(21) Anmeldenummer: 12715853.3
(22) Anmeldetag: 18.04.2012
(51) Int. Cl.: B01D 53/64

(54) **VERFAHREN ZUR ABSCHEIDUNG VON QUECKSILBER AUS RAUCHGASEN VON HOCHTEMPERATURANLAGEN**
METHOD FOR PRECIPITATING MERCURY FROM FLUE GASES OF HIGH-TEMPERATURE PLANTS
PROCÉDÉ DESTINÉ À ÉLIMINER LE MERCURE CONTENU DANS LES FUMÉES D'INSTALLATIONS À HAUTE TEMPÉRATURE

(30) Priorität: 01.06.2011 DE 102011103829
(43) Veröffentlichungstag der Anmeldung: 09.04.2014
(73) Patentinhaber: Rheinbraun Brennstoff GmbH, 50935 Köln (DE)
(72) Erfinder: ARNDT, Richard, 50374 Liblar (DE); HEUTER, Josef, 50935 Köln (DE); WIRLING, Jürgen, 50354 Hürth (DE)
(74) Vertreter: Kierdorf Ritschel
(86) Internationale Anmeldenummer: PCT/EP2012/001672
(87) Internationale Veröffentlichungsnummer: WO 2012/163450

(56) Entgegenhaltungen:
- WO-A1-2009/129298
- WO-A1-2010/036752
- DE-B4- 10 233 173
- US-A1- 2007 180 990
- US-A1- 2010 031 818

## Beschreibung

Die Erfindung betrifft ein Verfahren zur Abscheidung von Quecksilber aus Rauchgasen von Hochtemperaturanlagen, insbesondere von Kraftwerken und Abfallverbrennungsanlagen, bei welchem dem Rauchgas in Strömungsrichtung hinter der Feuerung Brom und/oder bromhaltige Verbindungen und/oder Alkalisulfide oder sonstige Schwefelverbindungen wie beispielsweise schwefelige Säure, insbesondere Natriumtetrasulfid als Reaktanten zugegeben werden und anschließend das Rauchgas wenigstens einer trockenen Reinigung zur Abtrennung des Quecksilbers und etwa überschüssiger Reaktanten unterzogen wird.

Quecksilber und Quecksilberverbindungen sind grundsätzlich in organischen bzw. fossilen Brennstoffen in mehr oder weniger großen Mengen vorhanden. Durch zunehmende Verbrennung fossiler Brennstoffe wird mehr Quecksilber mobilisiert und in der Biosphäre angereichert. Wegen der relativ hohen Toxizität von Quecksilber, insbesondere von organisch gebundenem Quecksilber, das direkt oder indirekt über die Nahrungskette auch vom Menschen aufgenommen wird, existieren relativ strenge Grenzwerte für die gesetzlich zulässigen Emissionen von Quecksilber z. B. aus Verbrennungsanlagen und Kraftwerken.

Obwohl beispielsweise bei in Deutschland betriebenen Kraftwerken und Abgasverbrennungsanlagen und ähnlichen Hochtemperaturanlagen bereits verhältnismäßig niedrige Quecksilber-Reingaskonzentrationen erzielt werden, hauptsächlich wegen der in Deutschland praktizierten Nasswäsche von Rauchgasen, gibt es insbesondere wegen der hohen Rauchgasvolumenströme, die beachtliche Quecksilberfrachten mit sich führen, weiterhin Bestrebungen, die Quecksilberemissionen zu reduzieren.

Quecksilber liegt in Verbrennungsanlagen und Kohlekraftwerken im Wesentlichen in zwei verschiedenen Formen vor, dem elementaren Quecksilber und dem oxidierten zweiwertigen Quecksilber. Im Gegensatz zu dem gasförmigen elementaren Quecksilber ist das gasförmige oxidierte Quecksilber wasserlöslich und kann daher in einer nachgeschalteten Rauchgasreinigungsanlage aus dem Rauchgas ausgewaschen werden. Auch ist die oxidierte Form des Quecksilbers in einer trockenen Rauchgasreinigung, beispielsweise mittels Flugstromadsorption, besser abscheidbar als elementares Quecksilber.

Die häufigste Form des oxidierten Quecksilbers ist das zweiwertige Quecksilberchlorid. Es entsteht bei der sogenannten Quecksilberchlorierung im abkühlenden Kesselrauchgas. Das Chlor im Kesselrauchgas stammt dabei aus dem Brennstoff (z. B. in der Kohle enthaltenen Chloriden). Im heißen Brennraum entsteht dabei zunächst HCl, das bei Abkühlung über die sogenannte "Deacon-Reaktion" in Cl₂ umgewandelt wird. Allerdings wird in Gegenwart von SO₂, das aus dem im Brennstoff enthaltenen Schwefel entsteht, dieses Chlor über die sogenannte "Griffin-Reaktion" wieder zum HCl umgewandelt und steht somit nicht für die Oxidation des Quecksilbers zur Verfügung. In Abhängigkeit des Chlor-Schwefel- und Quecksilbergehaltes im Brennstoff ergibt sich am Kesselende einer Verbrennungsanlage ein Verhältnis oxidiertes Quecksilber zu elementarem Quecksilber. Je höher der Anteil an oxidiertem Quecksilber ist, desto einfacher und besser lässt sich Quecksilber in der nachfolgenden Rauchgasreinigung abscheiden. Wünschenswert ist also eine möglichst vollständige Oxidation des Quecksilbers.

Um eine solche zu erzielen, ist es grundsätzlich bekannt, der Verbrennung und/oder dem Abgasstrom Halogene, insbesondere Jod oder Brom zuzugeben und damit die Konzentration elementaren Quecksilbers im Gasstrom gezielt zu verringern.

Als besonders geeignet zur Verringerung des elementaren Quecksilbers im Rauchgasstrom hat sich die sogenannte "bromgestützte Quecksilberabscheidung" erwiesen.

In der DE 102 33 173 B4 ist ein Verfahren beschrieben, bei welchem bei einer mehrstufigen Feuerung und/oder dem Rauchgas in einem der Feuerung nachgeschalteten Anlagenteil Brom und/oder eine bromhaltige Verbindung und/oder eine Mischung verschiedener bromhaltiger Verbindungen zugeführt werden, wobei die Temperatur beim Kontakt der bromhaltigen Verbindungen mit dem Rauchgas mindestens 500°C betragen soll und die Verbrennung in Gegenwart einer schwefelhaltigen Verbindung insbesondere Schwefeldioxid unter Zusatz von Schwefel und/oder einer schwefelhaltigen Verbindung und/oder einer Mischung verschiedener schwefelhaltiger Verbindungen erfolgt. Das Rauchgas wird anschließend einer Nasswäsche unterzogen.

Ähnliche Verfahren zur Abscheidung von Quecksilber aus Rauchgasen sind beispielsweise aus der US 2007/0234902 A1, aus der US 2007/0140940 A1, aus der US 6,808,692 B2, aus der DE 10 2007 042 297 A1, aus der WO2007/149867 A1, aus der US 2009/0136401 A1, aus der US 2008/0134888 A1 sowie aus der DE 43 39 77 A1 bekannt. Ziel aller bekannter Verfahren ist es, eine 100%ige Oxidation des Quecksilbers durch die Zugabe von Reaktanten, beispielsweise einer bromhaltigen Verbindung zu erzielen, wobei einer Überschussdosierung in Kauf genommen wird.

Diese Art der Abgasreinigung trägt einerseits nicht dem Umstand Rechnung, dass die Reaktanten verhältnismäßig teuer sind, andererseits gehen die meisten Verfahren von einer nassen Abgasreinigung aus, so dass beispielweise auch die Zugabe von Brom im Verhältnis zum Quecksilber im Überschuss kein Problem darstellt.

Aus der WO 2009/129298 A1 ist ein Verfahren zur Abscheidung von Quecksilber aus Rauchgasen von Hochtemperaturanlagen bekannt, bei welchem dem Rauchgas in Strömungsrichtung hinter der Feuerung kohlenstoffhaltige Adsorbentien und Reaktanten in Form von chemisch vorbehandelten Aktivkohlen getrennt dosiert dem Rauchgasstrom aufgegeben werden.

Aus der US 2010/OO31818 A1 ist ein Verfahren zur Abscheidung von Quecksilbern aus Rauchgasen eines Kraftwerkskessels bekannt, bei welchem ein Teil der nicht vollständig verbrannten Asche aus dem Kessel abgezogen wird, abgekühlt wird und dem Rauchgasstrom stromaufwärts einer Partikelfiltereinrichtung aufgegeben wird. Bei einer Variante des dort beschriebenen Verfahrens ist vorgesehen, dem Rauchgasstrom getrennt dosierte Halogene oder Halogen Precursor aufzugeben. Alternativ kann die aus der Verbrennung abgezogene nicht vollständig ausgebrannte Asche über eine gewisse Zeit einer halogenhaltigen Atmosphäre ausgesetzt werden.

Aus dem Dokument US 2007/0180990 A1 ist ein Verfahren zur Abscheidung von Quecksilber aus den Rauchgasen eines Dampferzeugers bekannt, bei welchem pulverförmige Aktivkohlen getrennt von einer Halogene umfassenden Verbindung in eine Reaktionsstrecke dosiert werden und die in der Reaktionsstrecke mit den Reaktanten dotierten Sorbentien vor einem Feststoffabscheider in den Rauchgasstrom eingebracht werden.

Aus dem Dokument WO 2010/036752 A1 ist ein Verfahren zur Entfernung von Quecksilber aus Rauchgas unter Verwendung von Mischungen kohlenstoffhaltiger Substrate mit bromierten organischen Verbindungen bekannt.

Der Erfindung liegt daher die Aufgabe zugrunde, ein Verfahren der eingangs genannten Art hinsichtlich seiner Einstellbarkeit auf wechselnde Abgaszusammensetzung und hinsichtlich seines Anwendungsbereichs zu verbessern. Auch soll das Verfahren kostenmäßig optimiert werden.

Die Aufgabe wird gelöst mit den Merkmalen des Anspruchs 1, vorteilhafte Ausgestaltungen des Verfahrens ergeben sich aus dem Unteransprüchen.

Bei einem Verfahren zur Abscheidung von Quecksilber aus Rauchgasen von Hochtemperaturanlagen, insbesondere von Kraftwerken und Abfallverbrennungsanlagen, bei welchem dem Rauchgas in Strömungsrichtung hinter der Feuerung Brom und/oder bromhaltige Verbindungen und/oder Alkalisulfide als Reaktanten zugegeben werden und anschließend das Rauchgas wenigstens einer trockenen Reinigung zur Abtrennung des Quecksilbers und zur Abtrennung etwa überschüssiger Reaktanten unterzogen wird, wobei bei dem Verfahren vorgesehen ist, dass die Reaktanten und kohlenstoffhaltige Adsorbentien, vorzugsweise in Form von Aktivkohlen und/oder Aktivkoksen getrennt dosiert dem Rauchgasstrom aufgegeben werden und dass die Reaktanten in Abhängigkeit von einer vorzugsweise fortlaufend gemessenen Quecksilberkonzentration in den Rauchgasstrom dosiert werden.

Als kohlenstoffhaltige Adsorbentien finden bevorzugt Herdofenkokse Anwendung

Getrennt dosiert im Sinne der vorliegenden Erfindung bedeutet, dass die Aktivkohle und die Reaktanten jeweils über separat voneinander angeordnete und separat funktionsfähige Dosiereinrichtungen abgemessen/dosiert werden. Dies bedeutet jedenfalls nicht, dass die Dosierung der Reaktanten im weitesten Sinne unabhängig von der Dosierung der Aktivkohle ist. In erster Linie besteht eine Abhängigkeit der Dosierung der Reaktanten von der gemessenen Quecksilberkonzentration im Rauchgasstrom, wobei die Konzentration des Quecksilber in Strömungsrichtung hinter einer Rauchgasreinigung gemessen wird.

Einerseits ergibt sich so eine vorteilhafte Kombination von reaktiver und adsorptiver Quecksilberabscheidung, andererseits ist durch die Dosierung der Reaktanten in Abhängigkeit einer gemessenen Quecksilberkonzentration sichergestellt, dass die Zugabe der Reaktanten so effektiv und kostengünstig wie möglich ist. Dadurch ist sichergestellt, dass kein Überschuss an Reaktanten im Rauchgas verbleibt, was insbesondere dann nicht wünschenswert ist, wenn beispielsweise Brom oder Bromverbindungen als Reaktanten Anwendung finden, die bekanntermaßen eine gewisse Toxizität besitzen.

Bei einer bevorzugten Variante des Verfahrens gemäß der Erfindung ist vorgesehen, dass die Reaktanten mit dem Rauchgas bei einer Rauchgastemperatur zwischen 80°C und 490°C, vorzugsweise zwischen 80°C und 250°C in Kontakt gebracht werden.

Erfindungsgemäß ist eine vorteilhafte Kombination von bromgestützter und adsorptiver Quecksilberabscheidung vorgesehen. Dabei hat sich herausgestellt, dass, anders als dies in der Fachpresse und im Stand der Technik gemäß DE 102 33 173 B4 beschrieben ist, bereits eine nennenswerte Quecksilberbromierung bei Temperaturen deutlich unterhalb von 500°C möglich ist.

Der Wirkmechanismus lässt sich aus der Dissoziation des NaBr bzw. des CaBr₂ zu Bromidanionen erklären, die im Porengerüst der Aktivkohle und in Anwesenheit von Wasserdampf bei Temperaturen unter 500°C erfolgt. Von wesentlichem Einfluss ist hierbei die Kapillarstruktur der Aktivkohle bzw. des Herdofenkokses durch die in Verbindung mit dem in der Atmosphäre enthaltenen Wasserdampf die Dissoziation mit der daran anschließenden Oxidation zu Quecksilberbromid abläuft. Das hierbei gebildete Quecksilberbromid ist im Gegensatz zu dem in der DE 102 33 173 B4 beschriebenen Verfahren fest in der Aktivkohlematrix gebunden und kann über das nachgeschaltete Entstaubungsaggregat sicher abgeschieden werden.

Grundsätzlich kann vorgesehen sein, dass Reaktanten in Mischung mit kohlenstoffhaltigen Adsorbentien mit dem Rauchgasstrom in Kontakt gebracht werden. Die Reaktanten können in flüssiger Phase oder in der Gasphase dosiert den kohlenstoffhaltigen Adsorbentien unmittelbar vor deren Einbringung in den Rauchgasstrom zugegeben werden. Dabei findet eine in situ Dotierung der Adsorbentien statt. Besonders vorteilhaft ist es, wenn die Zugabe von Reaktanten in den Förderweg eine Aktivkohledosiereinrichtung erfolgt, wodurch eine effektive Dotierung der Aktivkohle erreicht wird und mögliche Strähnen bei einer separaten Dosierung im Rauchgaskanal vermieden werden. Insbesondere bei einer ohnehin vorhandenen Aktivkohledosierung lässt sich dieses Verfahren mit äußerst geringem Nachrüstaufwand durchführen. Die Zugabe der Reaktanten in den Förderweg der Aktivkohledosiereinrichtung kann in Strömungsrichtung der Tragluft/Förderluft sowohl hinter als auch vor einer Aktivkohlezugabe erfolgen.

Alternativ ist vorgesehen, dass die Reaktanten bezogen auf die Rachgasströmung in flüssiger Phase oder in der Gasphase stromaufwärts oder stromabwärts von in Form einer Flugstaubwolke in den Rauchgasstrom eingebrachten kohlenstoffhaltigen Adsorbentien in den Rauchgasstrom eingebracht werden. Als kohlenstoffhaltige Adsorbentien kommen beispielsweise Aktivkohlen und/oder Aktivkokse in Betracht. Vorzugsweise finden als kohlenstoffhaltige Adsorbentien Herdofenkokse Anwendung. Beispielsweise kann als Herdofenkoks ein Koks der Handelsmarke HOK Anwendung finden, der auf der Basis von Braunkohle hergestellt wurde. Dieser Herdofenkoks besitzt eine anerkannt hohe Adsorptionsleistung.

Das erfindungsgemäße Verfahren hat gegenüber den bekannten Verfahren insbesondere den Vorzug, dass der Schwefeldioxidanteil im Abgas für das Verfahren nicht kritisch ist.

In jedem Falle werden Konkurrenzreaktionen der Reaktanten, insbesondere des Broms mit anderen im Abgas enthaltenen Substanzen dadurch vermieden, dass die Reaktanten in unmittelbarer räumlicher Nähe zu den Adsorbentien dem Gasstrom aufgegeben werden. Durch eine besonders günstige Kombination von reaktiver und adsorptiver Abgasreinigung ist das Verfahren gemäß der Erfindung nicht auf eine nachgeschaltete Nasswäsche angewiesen.

Bei einer bevorzugten Variante des Verfahrens gemäß der Erfindung ist vorgesehen, dass der räumliche Abstand zwischen der Zugabe von Reaktanten, insbesondere von Brom und/oder bromhaltigen Verbindungen und der Zugabe von Adsorbentien gemessen als Temperaturdifferenz des Rauchgasstromes < 410°C beträgt. Mit anderen Worten, der räumliche Abstand zwischen der Zugabe von Reaktanten in den Abgasstrom hinter einer Feuerung ist so gewählt, dass der Rauchgasstrom zwischen Zugabe von Reaktanten und Zugabe von Adsorbentien sich nicht mehr als 410°C abkühlt. Dabei ist nach der Erfindung nicht ausgeschlossen, dass die Abkühlung des Rauchgasstroms etwa zwischen der Zugabe der Reaktanten und der Zugabe von Adsorbentien unter Anwendung eines oder mehrerer Wärmetauscher erfolgt.

Vorzugsweise finden als Bromverbindungen Natriumbromid und/oder Calciumbromid und/oder Bromwasserstoff (HBr) Anwendung. Als Alkalisulfide kommen Natriumtetrasulfid als Lösung oder dampfförmig in Betracht.

Als Alkalisulfat kommt beispielsweise Natriumtetrasulfid (Na₂S₄) in flüssiger Phase oder in der Gasphase in Betracht.

Das Brom und/oder die Bromverbindungen werden in flüssiger oder gasförmiger Form in den Rauchgasstrom eingebracht.

Bei einer zweckmäßigen Variante des Verfahrens gemäß der Erfindung kann der Anteil an Reaktanten an der insgesamt zudosierten Menge an Adsorbentien und Reaktanten zwischen 3 und 14 Masseprozent, vorzugsweise zwischen 5 und 12 Masseprozent betragen.

Als Adsorbentien können beispielsweise alle Arten von Aktivkohlen und Aktivkoksen sowohl einzeln als auch als in Mischung Anwendung finden. Bei einer besonders bevorzugten Variante des Verfahrens finden als kohlenstoffhaltige Adsorbentien wie vorstehend bereits erwähnt sogenannte Herdofenkokse Anwendung.

Bei separater Zugabe des Broms und/oder der Bromverbindung erfolgt die Einbringung von Natriumbromid oder Calciumbromid, vorzugsweise flüssig durch eine Eindüsung in den Rauchgasstrom, hinter einer Feuerung insbesondere bei einer Temperatur von < 500°C und vor einer Rauchgasentstaubung und einer etwa nachgeschalteten Rauchgasentschwefelung. Bei Einbringung einer flüssigen Bromverbindung kommt beispielsweise Calciumbromid (CaBr₂) oder Natriumbromid als Bromverbindung in Betracht, bei gasförmiger Zugabe kann beispielsweise Bromwasserstoff (HBr) Anwendung finden. Natriumtetrasulfid kann beispielsweise gasförmig/dampfförmig dem Rauchgasstrom aufgegeben werden.

Stromabwärts der Zugabe der Reaktanten werden dann kohlenstoffhaltige Adsorbentien in Form einer Flugstaubwolke in den Rauchgasstrom eingebracht, wobei der Abstand der Zugabe der Reaktanten einerseits und der kohlenstoffhaltigen Adsorbentien die im Rauchgasstrom zur Verfügung stehende Reaktionsstrecke definieren, über welche beispielsweise eine Bromierung des elementaren Quecksilbers im Rauchgasstrom erfolgt. Vorzugsweise erfolgt die Zugabe der Reaktanten bei Temperaturen < 500°C und > 250°C. Die Zugabe der kohlenstoffhaltigen Adsorbentien in Form einer Flugstaubwolke erfolgt bei Temperatur ≤ 250°C. Die Abscheidung von beispielsweise Quecksilberbromid und überschüssigen Broms erfolgt über die kohlenstoffhaltigen Adsorbentien, die in einem nachgeschalteten Entstaubungsaggregat aus dem Rauchgasstrom ausgehalten werden. Als Entstaubungsaggregate kommen die üblichen Elektrofilter, Tuchfilter etc. in Betracht.

Bei der zuvor beschriebenen Variante der getrennten Zugabe von Reaktanten, insbesondere von Brom einerseits und Adsorbentien andererseits steht das in den Abgasstrom eingedüste Brom bereits in der Gasphase für die Oxidation des Quecksilbers zur Verfügung. In einem weiteren zusätzlichen Schritt erfolgt die Quecksilberabtrennung bzw. Abscheidung an der dann im Gaspfad mit dem Reaktanten dotierten Aktivkohle.

Bei dem Verfahren gemäß der Erfindung erfolgt zumindest bei getrennter Zugabe von Brom und Adsorbentien bzw. Herdofenkoks eine *in situ* Dotierung der kohlenstoffhaltigen Adsorbentien.

Bei dem Verfahren gemäß der Erfindung erfolgt die separate Zugabe von Calciumbromid oder Natriumbromid in der flüssigen Phase oder von Bromwasserstoff in der Gasphase, wobei die kohlenstoffhaltigen Adsorbentien in der Flugstaubwolke Kristallisationskeime für die in den Rauchgasstrom eingebrachten Bromverbindungen bilden.

Wie eingangs bereits erwähnt, können die kohlenstoffhaltigen Adsorbentien und die Bromverbindungen auch in Mischung dem Rauchgasstrom aufgegeben werden. In diesem Falle ist es sinnvoll und zweckmäßig, diese Mischung bei Temperaturen ≤ 250°C dem Rauchgasstrom aufzugeben. Dabei kann beispielsweise Herdofenkoks mit Natriumbromid oder Calciumbromid in flüssiger Form oder als Salz in Mischung vorliegen. Je nach Gaszusammensetzung des Rauchgases kann eine Dosierung der Adsorbentien im Bereich von 20 mg bis 300 mg bezogen auf einen m³ Rauchgas, vorzugsweise zwischen 50 mg und 150 mg Rauchgas erfolgen. Die Zugabe von Natriumbromid bzw. Calciumbromid bezogen auf den Bromanteil im Gemisch mit den Adsorbentien liegt bei zwischen 3 und 14 Masseprozent, vorzugsweise zwischen 5 und 10 Masseprozent, abhängig von der Quecksilberkonzentration im Abgas.

Im Falle einer Flüssigdosierung der Reaktanten werden die Reaktanten maximal mit einem Anteil von 10 Masseprozent der dem Rauchgasstrom aufgegebenen kohlenstoffhaltigen Adsorbentien zudosiert. Die kohlenstoffhaltigen Adsorbentien können beispielsweise mit einer Menge zwischen 20 bis 300 mg Adsorbentien pro m³ zu reinigendem Gasvolumenstrom in den Rauchgasstrom eindosiert werden. Vorzugsweise werden etwa 40 bis 250 mg kohlenstoffhaltige Adsorbentien pro m³ zu reinigendem Gasvolumen aufgewendet.

Bei einer besonders bevorzugten Variante des erfindungsgemäßen Verfahrens erfolgt eine Regelung der Dosierung der Reaktanten in Abhängigkeit einer vorgegebenen Quecksilbergrenzkonzentration als Sollwert, wobei die Regelung unter fortlaufender Messung der Quecksilberkonzentration im Rauchgasstrom als Istwert durchgeführt wird.

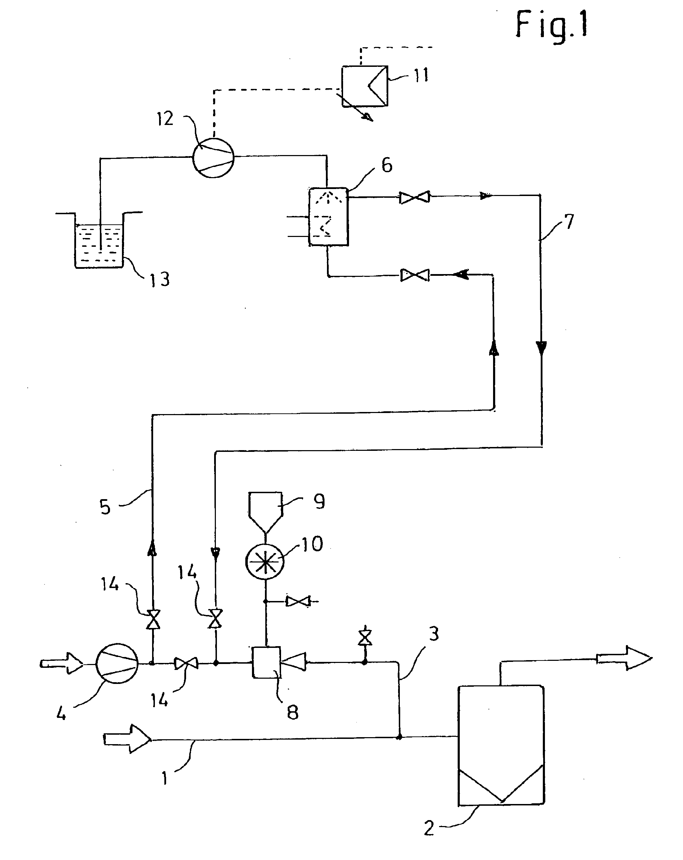

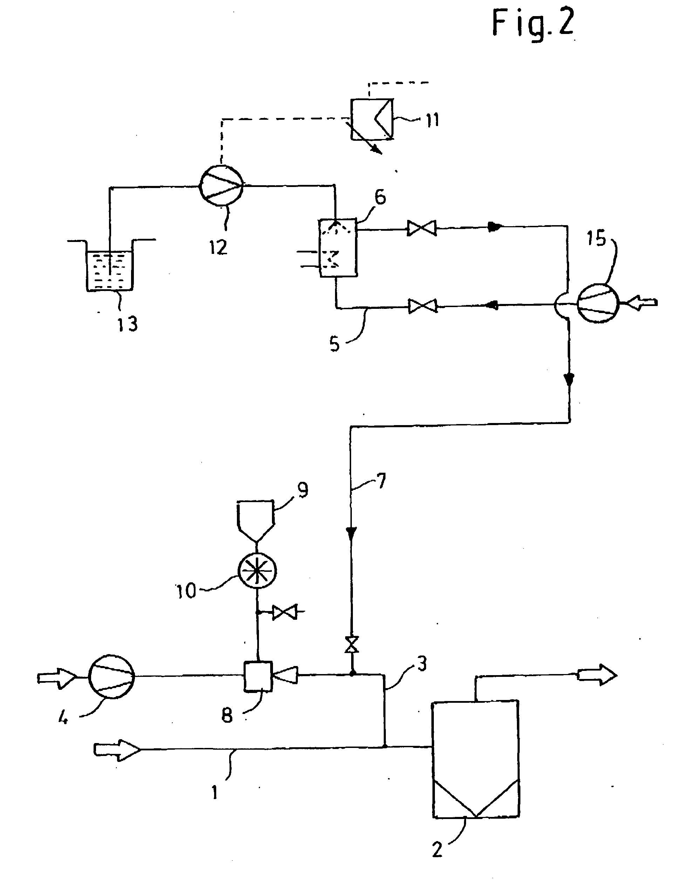

Das Verfahren gemäß der Erfindung wird nachstehend schematisch anhand zweier Ausführungsbeispiele unter Bezugnahme auf die beigefügten Verfahrensschemata erläutert, von welchen Fig. 1 eine schematische Darstellung des Verfahrensablaufs nach einer ersten Variante des erfindungsgemäßen Verfahrens und Fig. 2 eine schematische Darstellung des Verfahrensschemas nach einer zweiten Variante des erfindungsgemäßen Verfahrens zeigt.

Mit dem Bezugszeichen 1 in Fig. 1 ist schematisch ein Rauchgaskanal bezeichnet, der zu einem nicht dargestellten Kamin geführt. In dem Rauchgaskanal 1 ist ein Entstaubungsaggregat 2, beispielsweise in Form eines Tuchfilters vorgesehen. Über eine Injektionsleitung 3 wird dem Rauchgaskanal 1 eine Mischung aus Adsorbentien und Reaktanten aufgegeben. Als Trägermedium für die Adsorbentien und die Reaktanten dient Umgebungsluft, die über ein Gebläse 4 der Injektionsleitung 3 aufgegeben wird. Die Luft wird dabei über einen Verdampfervorlauf 5 einem elektrisch beheizten Verdampfer 6 für die zu dosierende Reaktanten zugeführt. Anstelle des Verdampfers 6 kann eine elektrisch beheizte Mischkammer vorgesehen sein, in welchem eine Zerstäubung und/oder Verneblung der Reaktanten vorgesehen ist. Dadurch ergibt sich eine besonders feine und gleichmäßige Vernebelung im Fördergasstrom.

Die dampfförmigen/gasförmigen Reaktanten werden über den Verdampferrücklauf 7 in die Injektionsleitung 3 eingespeist. Die Injektionsleitung 3 mündet in einen Injektor 8, in welchen Herdofenkoksstaub aus einem Vorratsbehälter 9 über eine Zellenradschleuse 10 zudosiert wird. Der Injektor 8 verbringt das Gemisch aus Reaktanten und Herdofenkoks in den Rauchgaskanal 1. Dort wird die Mischung in Form einer Flugstaubwolke in den Rauchgaskanal 1 eingebracht. Nach entsprechender Beladung mit Quecksilber werden die Adsorbentien über das Entstaubungsaggregat 2 aus dem Rauchgaskanal 1 wieder ausgehalten. Hinter dem Entstaubungsaggregat 2 erfolgt eine fortlaufende Quecksilbermessung im Rauchgas. Das entsprechend aufbereitete Messsignal wird einem Regler 11 zugeführt, der wiederum eine Dosierpumpe 12 steuert. Die Dosierpumpe 12 befördert Reaktanten in flüssiger bzw. die Reaktanten in Lösung aus einem Dosiermittelvorratsbehälter 13 in den Verdampfer 6.

Die in den Figuren dargestellten Verschaltung ist insbesondere zu einer Nachrüstung einer bestehenden Flugstromadsorptionsanlage vorgesehen. Aus diesem Grunde sind Absperrventile 14 sowohl im Verdampfervorlauf 5 als auch im Verdampferrücklauf 6 sowie in der Injektionsleitung 3 zwischen Verdampfervorlauf 5 und Verdampferrücklauf 6 vorgesehen. Über das Gebläse 4 wird Atmosphärenluft über die Injektionsleitung 3 in den Injektor 8 eingebracht, in welchem Herdofenkoksstaub zudosiert wird. Für den Fall, dass zusätzlich zu dem kohlenstoffhaltigen Adsorbens Reaktanten beispielsweise in Form von Bromverbindungen oder Alkalisulfiden in den Rauchgaskanal 1 dosiert werden sollen, wird das Absperrventil 14 zwischen Verdampfervorlauf 5 und Verdampferrücklauf 7 geschlossen, die Absperrventile 14 in den Verdampfervorlauf 5 und im Verdampferrücklauf 7 hingegen werden geöffnet, so dass Reaktanten in dampfförmiger/gasförmiger Form der Injektionsleitung 3 vor dem Injektor 8 aufgegeben werden.

In dem in Fig. 2 dargestellten Ausführungsbeispiel sind gleiche Bauteile mit gleichen Bezugszeichen versehen. Dieses Ausführungsbeispiel unterscheidet sich dahingehend von dem in Fig. 1 dargestellten Ausführungsbeispiel, dass die Reaktanten der Injektionsleitung 3 in Strömungsrichtung hinter dem Injektor 8 zudosiert werden. In diesem Fall ist ein weiteres Gebläse 15 vorgesehen, über welches Umgebungsluft/Atmosphärenluft in den Verdampfervorlauf 5 eingebracht wird. Der Verdampfervorlauf 5 ist in diesem Fall nicht an die Injektionsleitung 3 angeschlossen.

Diese Variante hat insbesondere den Vorzug, dass nicht der gesamte Förderluftstrom für die Aktivkohle über den Verdampfer oder eine Mischkammer geführt werden muss. Vielmehr wird nur eine Teilluftmenge über das separate Gebläse 15 dem Verdampfer 6 zugeführt, so dass das Gebläse 15 entsprechend klein dimensioniert werden kann. Diese Variante der Dosierung der Reaktanten in den Förderweg der Aktivkohledosiereinrichtung hinter dem Injektor 8 ist insbesondere für eine Nachrüstung bestehender Anlagen mit geringstem apparativem Aufwand vorteilhaft.

### Bezugszeichenliste

- 1: Rauchgaskanal
- 2: Entstaubungsaggregat
- 3: Injektionsleitung
- 4: Gebläse
- 5: Verdampfervorlauf
- 6,7: Verdampferrücklauf
- 8: Injektor
- 9: Vorratsbehälter
- 10: Zellenradschleuse
- 11: Regler
- 12: Dosierpumpe
- 13: Dosiermittelvorratsbehälter
- 14: Absperrventile
- 15: Gebläse

## Patentansprüche

1. Verfahren zur Abscheidung von Quecksilber aus Rauchgasen von Hochtemperaturanlagen, insbesondere von Kraftwerken und Abfallverbrennungsanlagen, bei welchem dem Rauchgas in Strömungsrichtung hinter der Feuerung Brom und/oder bromhaltige Verbindungen und/oder Alkalisulfide als Reaktanten zugegeben werden und anschließend das Rauchgas wenigstens einer trockenen Reinigung zur Abtrennung des Quecksilbers und etwa überschüssiger Reaktanten unterzogen wird, **dadurch gekennzeichnet, dass** die Reaktanten und kohlenstoffhaltige Adsorbentien, in Form von Aktivkohlen und/oder Aktivkoksen getrennt dosiert dem Rauchgasstrom aufgegeben werden und dass die Reaktanten in Abhängigkeit von einer fortlaufend gemessenen Quecksilberkonzentration im Rauchgas in den Rachgasstrom dosiert werden.

2. Verfahren nach Anspruch 1, **dadurch gekennzeichnet, dass** die Reaktanten mit dem Rauchgas bei einer Rauchgastemperatur zwischen 80°C und 490°C, vorzugsweise zwischen 80°C und 250°C in Kontakt gebracht werden.

3. Verfahren nach Anspruch 1 oder 2, **dadurch gekennzeichnet, dass** die Reaktanten in Mischung mit kohlenstoffhaltigen Adsorbentien, vorzugsweise in Mischung mit Aktivkohlen und/oder Aktivkoksen mit dem Rauchgasstrom in Kontakt gebracht werden.

4. Verfahren nach einem der Ansprüche 1 oder 2, **dadurch gekennzeichnet, dass** die Reaktanten in der flüssigen Phase oder in der Gasphase bezogen auf die Rauchgasströmung stromaufwärts oder stromabwärts von in Form einer Flugstaubwolke in den Rauchgasstrom eingebrachten kohlenstoffhaltigen Adsorbentien in den Rauchgasstrom eingebracht werden.

5. Verfahren nach Anspruch 4, **dadurch gekennzeichnet, dass** der räumliche Abstand zwischen der Zugabe von Reaktanten und der Zugabe von Adsorbentien gemessen als Temperaturdifferenz des Rauchgasstroms ≤ 410°C beträgt.

6. Verfahren nach einem der Ansprüche 1 bis 5, **dadurch gekennzeichnet, dass** als Bromverbindungen Natriumbromid und/oder Bromwasserstoff und/oder Calciumbromid Anwendung finden.

7. Verfahren nach einem der Ansprüche 1 bis 6, **dadurch gekennzeichnet, dass** als Alkalisulfide Natriumtetrasulfid Anwendung findet.

8. Verfahren nach einem der Ansprüche 1 bis 7, **dadurch gekennzeichnet, dass** die Reaktanten in flüssiger oder gasförmiger Form in den Rauchgasstrom eingebracht werden.

9. Verfahren nach einem der Ansprüche 1 bis 8, **dadurch gekennzeichnet, dass** der Anteil an Reaktanten an der insgesamt zudosierten Menge an Adsorbentien und Reaktanten zwischen 3 und 4 Masseprozent, vorzugsweise zwischen 5 und 12 Masseprozent beträgt.

10. Verfahren nach einem der Ansprüche 1 bis 9, **dadurch gekennzeichnet, dass** eine Regelung der Dosierung in Abhängigkeit einer vorgegebenen Quecksilbergrenzkonzentration im Rauchgas als Sollwert erfolgt.

11. Verfahren nach Anspruch 3 oder einem der Ansprüche 6 bis 10, **dadurch gekennzeichnet, dass** die Reaktanten in den Förderweg eine Dosiereinrichtung für Aktivkohlen- und/oder Aktivkokse zugegeben werden.

## Claims

1. Process for separating mercury out of flue gases from high-temperature plants, especially from power plants and waste incineration plants, in which bromine and/or bromine compounds and/or alkali metal sulfides or other sulfur compounds are added as reactants to the flue gas beyond the firing operation in flow direction, and then the flue gas is subjected to at least one dry cleaning operation to remove the mercury and any excess reactants, **characterized in that** the reactants and carbonaceous adsorbents, preferably in the form of activated carbons and/or activated cokes, are introduced into the flue gas stream by separate metered addition, and **in that** the reactants are metered into the flue gas stream as a function of a preferably constantly measured mercury concentration in the flue gas.

2. Process according to Claim 1, **characterized in that** the reactants are contacted with the flue gas at a flue gas temperature between 80°C and 490°C, preferably between 80°C and 250°C.

3. Process according to Claim 1 or 2, **characterized in that** the reactants are contacted with the flue gas stream in a mixture with carbonaceous adsorbents, preferably in a mixture with activated carbons and/or activated cokes.

4. Process according to either of Claims 1 and 2, **characterized in that** the reactants in the liquid phase or in the gas phase are introduced into the flue gas stream upstream or downstream, based on the flue gas flow, of carbonaceous adsorbents introduced into the flue gas stream in the form of an entrained dust cloud.

5. Process according to Claim 4, **characterized in that** the spatial distance between the addition of reactants and the addition of adsorbents, measured as the temperature difference of the flue gas stream, is ≤ 410°C.

6. Process according to any of Claims 1 to 5, **characterized in that** the bromine compounds employed are sodium bromide and/or hydrogen bromide and/or calcium bromide.

7. Process according to any of Claims 1 to 6, **characterized in that** the alkali metal sulfide employed is sodium tetrasulfide.

8. Process according to any of Claims 1 to 7, **characterized in that** the reactants are introduced into the flue gas stream in liquid or gaseous form.

9. Process according to any of Claims 1 to 8, **characterized in that** the proportion of reactants in the total amount of adsorbents and reactants metered in is between 3 and 4% by mass, preferably between 5 and 12% by mass.

10. Process according to any of Claims 1 to 9, **characterized in that** the metered addition is regulated as a function of a predefined limiting mercury concentration in the flue gas as a target value.

11. Process according to Claim 3 or any of Claims 6 to 10, **characterized in that** the reactants are added to the conveying pathway a metering device for activated carbons and/or activated cokes.

## Revendications

1. Procédé destiné à éliminer le mercure contenu dans les fumées d'installations à haute température, notamment de centrales électriques et d'installations d'incinération de déchets, selon lequel du brome et/ou des composés contenant du brome et/ou des sulfures alcalins sont ajoutés en tant que réactifs aux fumées après le chauffage dans la direction de l'écoulement, puis les fumées sont soumises à au moins une purification à sec pour séparer le mercure et les réactifs en excès, **caractérisé en ce que** les réactifs et des adsorbants contenant du carbone, sous la forme de charbon actif et/ou de coke actif, sont ajoutés dosés séparément au courant de fumées et **en ce que** les réactifs sont dosés dans le courant de fumées en fonction d'une concentration en mercure dans les fumées mesurée en continu.

2. Procédé selon la revendication 1, **caractérisé en ce que** les réactifs sont mis en contact avec les fumées à une température des fumées comprise entre 80 °C et 490 °C, de préférence entre 80 °C et 250 °C.

3. Procédé selon la revendication 1 ou 2, **caractérisé en ce que** les réactifs sont mis en contact avec le courant de fumées en mélange avec des adsorbants contenant du carbone, de préférence en mélange avec du charbon actif et/ou du coke actif.

4. Procédé selon l'une quelconque des revendications 1 ou 2, **caractérisé en ce que** les réactifs sont introduits dans le courant de fumées en phase liquide ou en phase gazeuse en amont ou en aval par rapport à l'écoulement des fumées d'adsorbants contenant du carbone introduits dans le courant de fumées sous la forme d'un nuage de poussières volantes.

5. Procédé selon la revendication 4, **caractérisé en ce que** l'écart spatial entre l'ajout des réactifs et l'ajout des adsorbants, mesuré sous la forme d'une différence de température du courant de fumées, est ≤ 410 °C.

6. Procédé selon l'une quelconque des revendications 1 à 5, **caractérisé en ce que** du bromure de sodium et/ou du bromure d'hydrogène et/ou du bromure de calcium sont utilisés en tant que composés de bore.

7. Procédé selon l'une quelconque des revendications 1 à 6, **caractérisé en ce que** du tétrasulfure de sodium est utilisé en tant que sulfure alcalin.

8. Procédé selon l'une quelconque des revendications 1 à 7, **caractérisé en ce que** les réactifs sont introduits dans le courant de fumées sous forme liquide ou gazeuse.

9. Procédé selon l'une quelconque des revendications 1 à 8, **caractérisé en ce que** la proportion de réactifs par rapport à la quantité totale introduite d'adsorbants et de réactifs est comprise entre 3 et 4 pour cent en masse, de préférence entre 5 et 12 pour cent en masse.

10. Procédé selon l'une quelconque des revendications 1 à 9, **caractérisé en ce qu'**une régulation du dosage en fonction d'une concentration de mercure dans les fumées prédéterminée en tant que valeur de consigne a lieu.

11. Procédé selon la revendication 3 ou l'une quelconque des revendications 6 à 10, **caractérisé en ce que** les réactifs sont ajoutés dans la voie de transport d'un dispositif de dosage pour charbon actif et/ou coke actif.
